# EUROPÄISCHE PATENTSCHRIFT

(11) **EP 2 694 278 B1**
(45) Veröffentlichungstag und Bekanntmachung des Hinweises auf die Patenterteilung: **20.01.2016**
(21) Anmeldenummer: 12723388.0
(22) Anmeldetag: 02.04.2012
(51) Int. Cl.: B29D 99/00, B29L 31/60

(54) **VERFAHREN UND PRESSE ZUR HERSTELLUNG EINER WABENSTRUKTUR**
METHOD AND PRESS FOR PRODUCING A HONEYCOMB STRUCTURE
PROCÉDÉ ET PRESSE POUR LA FABRICATION D'UNE STRUCTURE ALVÉOLÉE

(30) Priorität: 01.04.2011 DE 102011015913; 05.04.2011 DE 102011001821; 21.02.2012 DE 102012101361
(43) Veröffentlichungstag der Anmeldung: 12.02.2014
(73) Patentinhaber: Niemöller, Gerd, 8200 Schaffhausen (CH)
(72) Erfinder: NIEMÖLLER, Gerd, 8200 Schaffhausen (CH); SCHINDLER, Kaspar, 5726 Unterkulm (CH); SZYMANSKI, Mark, 3372 Wanzwil (CH)
(74) Vertreter: Patentanwälte und Rechtsanwalt Weiß, Arat & Partner mbB
(86) Internationale Anmeldenummer: PCT/EP2012/055959
(87) Internationale Veröffentlichungsnummer: WO 2012/131091

(56) Entgegenhaltungen:
- EP-A1- 2 295 216
- WO-A1-03/016027
- US-A1- 2001 001 409
- US-A1- 2004 219 330
- "Honeycomb core" In: F. C. Campbell: "Manufacturing processes for advanced composites", 2004, Elsevier, Oxford, UK, XP002680625, ISBN: 1856174158 Seiten 269-277, Abbildung 23

## Beschreibung

### TECHNISCHES GEBIET

Die Erfindung betrifft ein Verfahren zur Herstellung einer Wabenstruktur nach den Merkmalen des Oberbegriffs des Anspruchs 1.

### STAND DER TECHNIK

Der Leichtbau und die damit verbundene Ressourcenschonung findet immer mehr Eingang in die Industrie. Der Leichtbau wird meist unter zur Zuhilfenahme von leichten Kernmaterialien, auf die Deckplatten geklebt werden, erreicht. Heute sind die gebräuchlichsten Kernmaterialien Schäume, Balsaholz und Wabenstrukturkerne.

Aus dem Stand der Technik wird auf die US 2004/219330 A1 hingewiesen, welche ein Verfahren zur Herstellung einer Wabenstruktur offenbart, bei der eine Wabenstruktur aus einem Substrat hergestellt wird, wobei das Verbinden des Wabenstrangs mit einem Wabenteppich erfolgt, wobei das Herstellen des Wabenstrangs aus einem Substrat und das Verbinden des Wabenstrangs mit den Wabenteppich in zwei aufeinanderfolgenden Arbeitsschritten ausgeführt wird.

Daneben wird auf die EP 2 295 216 A1 hingewiesen, welche ein Verbinden von zwei Wabenstrukturblöcken im Allgemeinen offenbart.

Die mechanischen Eigenschaften der Composites hängen im Wesentlichen von der Qualität des Kernmaterials ab.

Die bisher gebräuchlichen Kernmaterialien bestehen meist aus einem Trägermaterial, dass mit Harz getränkt wird, dieses vernetzt unter normalen atmosphärischen Bedingungen. Andere Kernmaterialien bestehen aus thermoplastischen Kunststoffen.

### BESCHREIBUNG DER ERFINDUNG

Aufgabe der Erfindung ist es, ein verbessertes Verfahren zur Herstellung einer Wabenstruktur zu schaffen.

Zur Lösung der Aufgabe führen die Merkmale des kennzeichnenden Teils des Anspruchs 1.

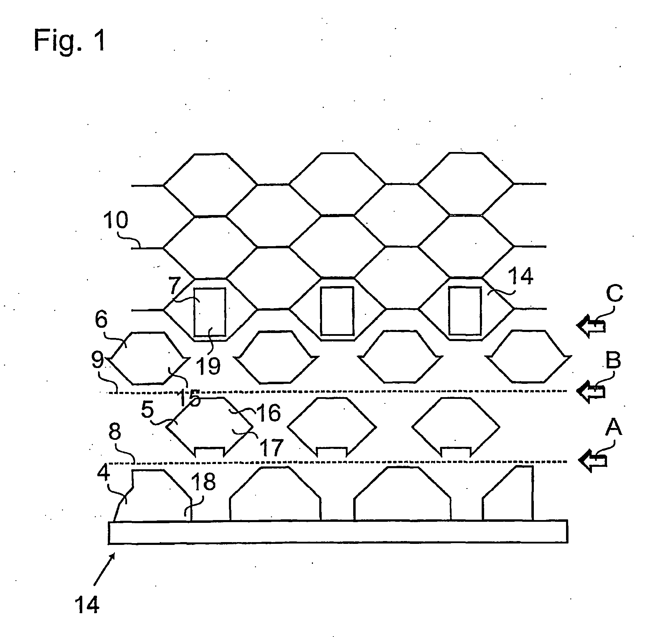

Im Folgenden ist mit den Begriff "oben" die zu einer ersten Reihe 14 eines Wabenteppichs nach Figur 1 gemeint. Mit dem Begriff "unten" ist die entgegen gesetzte Richtung gemeint. Mit dem Begriff "horizontal" ist eine Ausrichtung eines Wabenstrangs in den Figuren bezeichnet.

Ein Verfahren zur Herstellung einer Wabenstruktur umfasst bevorzugt die Schritte Herstellung eines Wabenstrangs aus zwei Substraten und Verbinden des Wabenstrangs mit einem Wabenteppich, wobei das Herstellen des Wabenstrangs aus zwei Substraten und das Verbinden des Wabenstrangs mit dem Wabenteppich in einem einzigen Arbeitsschritt ausgeführt werden soll. Dadurch ergibt sich der Vorteil, dass ein endlos langer Wabenteppich in einem Arbeitsschritt erzeugt werden kann.

Zweckmässigerweise umfassen die Schritte Herstellung eines Wabenstrangs aus zwei Substraten und Verbinden des Wabenstrangs mit einem Teppich die Unterschritte Einfädeln einer ersten Wabenreihe eines Wabenteppichs in eine erste Reihe von Stempeln, so dass eine zweite Reihe des Wabenteppichs in einer ersten Pressebene liegt.

In typischen Ausführungsbeispielen wird anschliessend ein erstes flächiges Substrat in eine zweite Pressebene eingebracht. Bevorzugt ist dies automatisch möglich.

In typischen Ausführungsbeispielen wird anschliessend ein zweites flächiges Substrat in eine dritte Pressebene eingebracht. Bevorzugt ist dies automatisch möglich. Dadurch ergibt sich der Vorteil, dass der Pressprozess automatisiert ablaufen kann.

Zweckmässigerweise werden die zweite und dritte Pressebene wellenförmig zusammengefahren, so dass das erste flächige Substrat und das zweite flächige Substrat automatisch nachgezogen werden. Dadurch ergibt sich der Vorteil, dass die Substrate beim Verpressen nicht reisen, sondern in geringem Masse nachgeführt werden.

Bevorzugt ist sind die Pressebenen aus einer Mehrzahl einzelner Stempel gebildet die unabhängig voneinander verfahren werden können.

Vorteilhafterweise werden alle drei Pressebenen so zueinander verfahren, dass in der ersten Pressebene die Oberfläche der Waben des Wabenstrangs und die Unterseite der ersten Waben des Wabenteppichs mit Druck und/oder Hitze beaufschlagt werden. Bevorzugt gleichzeitig werden in der zweiten Pressebene die Verbindungsstücke zwischen den Waben des Wabenstrangs und die nach unten gerichteten Seitenflächen des Wabenstrangs mit Druck und/oder Hitze beaufschlagt. Besonders bevorzugt ebenfalls gleichzeitig werden in der dritten Pressebene die nach unten gerichteten Seitenfläche des Wabenstrangs mit Druck und/oder Hitze beaufschlagt. Dadurch ergibt sich der Vorteil, dass alle genannten Flächen miteinander verbunden werden. Des Weiteren ist vorteilhaft, dass die nicht beaufschlagten Flächen reaktiv bleiben und sich in einem weiteren Pressenschnitt mit anschliessenden Wabensträngen vernetzen können.

Bevorzugt werden die Pressenelemente anschliessend so verfahren, dass die Pressebenen druckfrei werden.

In typischen Ausführungsbeispielen werden anschliessend die Stempel aus den fertig gestellten Waben entfernt.

Zweckmässigerweise wird die Wabenstruktur aus dem Wabenteppich und dem Wabenstrang um die Breite eines Wabenstrangs von den feststehenden Patrizen bzw. der dritten Pressebene entfernt. Dadurch ergibt sich der Vorteil, dass ein weiterer Wabenstrang herstellbar ist.

Bevorzugt anschliessend wird der Schritt des Einbringens eines flächigen Substrats in eine zweite Pressenebene und eines flächigen Substrats in eine dritte Pressebene wiederholt. Dadurch ergibt sich der Vorteil, dass eine Wabenstruktur aus einer Vielzahl von Reihen hergestellt werden kann.

Gesondert wird Schutz beansprucht für eine Wabenpresse zur Durchführung des erfindungsgemässen Verfahrens.

Bevorzugt umfasst die Wabenpresse eine erste Reihe Stempel und eine zweite Reihe Stempel. Besonders bevorzugt bilden die erste Reihe Stempel und die zweite Reihe Stempel eine erste Pressebene zwischen sich aus.

Vorteilhafterweise umfasst die Wabenpresse eine dritte Reihe Stempel, die mit der zweiten Reihe Stempel eine zweite Pressebene ausbildet.

Noch bevorzugter umfasst die Wabenpresse eine Reihe feststehender Patrizen, die mit der dritten Reihe Stempel eine dritte Pressebene ausbildet.

In typischen Ausführungsbeispielen umfasst der Stempel der ersten Reihe als Pressfläche eine Unterfläche, die in etwa einer Breite eines Verbindungsstücks zwischen den horizontal ausgerichteten Waben des Wabenstrangs entspricht.

Bevorzugt umfasst der Stempel der zweiten Reihe eine Pressfläche, die einem in Richtung der Patrizen weisenden unteren Umfang einer Wabe entspricht.

Vorteilhafterweise umfasst der Stempel der dritten Reihe eine Pressfläche, die einem Umfang einer Wabe entspricht und eine Unterseite einer Wabe freilässt.

Bevorzugt sind die einzelnen Pressenstempel alle separat voneinander verfahrbar, bspw. um Substrat nachzuführen. Besonders bevorzugt werden die Pressstempel beim Pressvorgang gemeinsam verfahren.

In typischen Ausführungsbeispielen umfasst die Wabenpresse ein Widerlager, zum Halten des Wabenteppichs nach dem Entfernen der Stempel.

Unter Druck und/oder Hitze wird der Vernetzungsprozess bewirkt. Das so verarbeitet Material hat sich als erheblich stabiler gezeigt.

Durch das Verpressen unter Druck und hoher Temperatur werden die Bindesysteme in alle Kapillaren eingepresst. Ein derart erzeugtes Wabengeflecht nimmt selbst bei hohen Temperaturen kein Wasser auf. Darüber hinaus ist die Vernetzung des Bindesystems vollständig, so dass auch bei hohen Temperaturen zu keinen Ausdünstungen mehr kommt.

Durch die erheblich höhere Stabilität kann die Wabengröße deutlich größer gewählt werden ohne, das die Drucklast im Vergleich zu den bestehenden Systemen geringer ist. Dies spart erheblich Material, was die Kosten deutlich senkt und das Recycling verbilligt.

Mit dem erfindungsgemässen Verfahren und der erfindungsgemässen Vorrichtung kann in einem Arbeitsprozess ein kompletter, endloser Wabenteppich erzeugt werden.

In typischen Ausführungsbeispielen umfasst der Stempel zumindest ein Wärmerohr. Mit dem Begriff Wärmerohr ist eine sogenannte Heatpipe bzw. ein Wärmeübertrager gemeint. Dadurch ergibt sich der Vorteil, dass der Stempel über seine gesamte Länge gleichmässig temperiert werden kann. Bevorzugt wird der Stempel mit ca. 300° temperiert. Besonders bevorzugt umfasst der Stempel zwei Wärmerohre.

In typischen Ausführungsbeispielen ist das Wärmerohr des Stempels in einem Wärmemedium angeordnet. Dadurch ergibt sich der Vorteil, dass der Stempel, insbesondere das Wärmerohr im Stempel temperiert wird. Bevorzugt ist der Stempel nur mit einem Ende, das nicht beim Pressvorgang mit einer Matrize im Eingriff steht, in dem Wärmemedium angeordnet.

Besonders bevorzugt ist das Wärmemedium ein Bad, insbesondere ein Bad aus geschmolzenen Salzen. Dadurch ergibt sich der Vorteil, dass da Wärmemedium nicht kocht und nicht verdampft. Dies ist vorteilhaft, weil die Fläche über dem Wärmebad dann nicht zwingend verschlossen werden muss, um eine Reaktion der Umgebung mit dem verdampfenden Wärmemedium zu verhindern.

Zweckmässigerweise weist der Stempel an seinem unteren Ende, das sich in dem Wärmebad befindet, eine vergrösserte Oberfläche auf. Vorzugsweise weist der Stempel dazu eine Mehrzahl von Rippen auf. Dadurch ergibt sich der Vorteil, dass der Stempel in dem Bereich, der mit dem Wärmemedium in Kontakt ist, eine vergrösserte Oberfläche aufweist und mehr Wärme aufnehmen kann.

In typischen Ausführungsbeispielen ist das Wärmemedium in einem Behälter aufgenommen. Bevorzugt umfasst der Behälter eine innere Schale. Besonders bevorzugt umfass der Behälter eine äussere Schale. Vorzugsweise umfasst der Behälter ein Isoliermaterial. Zweckmässigerweise ist das Isoliermaterial stabil. Vorzugsweise ist das Isoliematerial zwischen die innere Schale und die äussere Schale des Behälters eingebracht. Dadurch ergibt sich der Vorteil, dass wenig Wärme des Wärmemediums an die Umgebung abgegeben wird.

Zweckmässigerweise ist in dem Behälter mit dem Wärmemedium eine Einrichtung zur Wärmeübertragung eingebracht. Bevorzugt wird die Einrichtung zur Wärmeübertragung von einer weiteren Wärmequelle versorgt.

In typischen Ausführungsbeispielen umfasst der Behälter für das Wärmemedium eine Abdeckung, um zu verhindern, dass das Wärmemedium verschmutzt wird oder Wärme entweicht.

In typischen Ausführungsbeispielen umfasst die Wabenpresse eine zweistufige Pressmechanik. Dadurch ergibt sich der Vorteil, dass das Substrat, bzw. der Papierstreifen in einem ersten Pressschritt nahezu kraftlos zwischen Matrize und Patrize bzw. den einzelnen Stempeln in Form gebracht werden kann. Dadurch ergibt sich der Vorteil, dass ein grosser Teil des Verformungsweges nahezu kraftlos zurücklegbar ist. Erst der letzte Hub von ca. 0,5 mm zum Verfestigen des Substrats wird mit hohem Druck ausgeführt. Dadurch ergibt sich der Vorteil, dass nur ein sehr kleiner Weg mit hohem Druck überwunden werden muss. Dadurch ergibt sich der Vorteil, dass die Wabenpresse relativ einfach ausgestaltet werden kann.

In typischen Ausführungsbeispielen umfasst die Wabenpresse zwei Presseinrichtungen, die nacheinander betätigt werden. Dadurch ergibt sich der Vorteil, dass bei unterschiedlichen Abschnitten des Pressweges auf einfache Art und Weise unterschiedliche Presskräfte angelegt werden können.

Bevorzugt umfasst die Wabenpresse als erste Presseinrichtung eine mechanische Presseinrichtung. Vorzugsweise wird die mechanische Presseinrichtung verwendet, um grosse Verformungswege, relativ kraftlos auszuführen.

Vorzugsweise umfasst die Wabenpresse ein hydraulische Presseinrichtung. Bevorzugt ist die hydraulische Presseinrichtung die zweite Presseinrichtung. Besonders bevorzugt ist die hydraulische Presseinrichtung ein Hydraulikkissen.

Durch die zweistufig ausgebildete Pressmechanik ergibt sich der der Hohe Druck, bzw. die große Presskraft nur über einen sehr kurzen Weg ausgeübt werden muss.

### KURZE BESCHREIBUNG DER ZEICHNUNG

Nachfolgend wird die Erfindung anhand ihrer Zeichnungen kurz beschrieben, wobei die Figuren zeigen:
Figuren 1 bis 7 zeigen schematische Darstellungen einzelner Verfahrensschritte zur Herstellung einer Wabenstruktur nach dem erfindungsgemässen Verfahren;
Figur 8 zeigt eine Wabenpresse zum Ausführen der in den Figuren 1 bis 7 dargestellten Verfahrensschritte in einer geöffneten Stellung;
Figur 9 zeigt eine schematische Darstellung der Wabenpresse nach Figur 8 in einer ersten Schliessstellung, bei der der Papierfilm in Form verformt wird;
Figur 10 zeigt eine schematische Darstellung der Wabenpresse nach den Figuren 8 und 9 in einer zweiten Schliessstellung, bei der der Papierfilm verdichtet wird;
Figuren 11 bis 13 zeigen schematische Detaildarstellungen einzelner Verfahrensschritte beim Verformen und Pressen von Papier zwischen Matrize und Patrize;
Figur 14 zeigt eine schematische Darstellung eines Stempels für eine Wabenpresse mit zwei Wärmerohren;
Figur 15 zeigt eine schematische Darstellung einer Mehrzahl von Stempeln nach Figur 11, die in einem Wärmebad angeordnet sind.

### AUSFÜHRUNGSBEISPIEL

Figur 1 zeigt eine schematische Darstellung eines ersten Verfahrensschrittes zur Herstellung einer Wabenstruktur.

Das Verfahren findet in einer dritten Pressebene A, einer zweiten Pressebene B und einer ersten Pressebene C statt.

Die Pressebene A umfasst eine Reihe von feststehenden Patrizen 4 und eine dritte Reihe von Stempeln 5. Die Pressenstempel 5 sind versetzt zu den feststehenden Patrizen 4 angeordnet.

Die Pressebene B umfasst zusätzlich zu den Oberflächen der Pressenstempel 5 eine Reihe zweiter Stempel 6.

Die Pressebene C umfasst zusätzlich zu der Reihe Stempeln 6 eine weitere Reihe Stempel 7. Die Reihe der Stempel 7 ist versetzt zu der Reihe der Stempeln 6 angeordnet. Die Reihe der Stempel 6 sind versetzt zu der Reihe der Stempeln 5 angeordnet.

Dabei sind die Stempel 6 so zu den Stempeln 5 angeordnet, dass diese mit einer nach unten gerichtet Seitenfläche 15 bei zusammengefahrenen Stempeln eine nach oben gerichtet Seitenfläche 16 der Stempel 5 berühren.

Die Stempel 5 sind so angeordnet, dass nach unten gerichtet Seitenflächen 17, mit nach oben gewandten Seitenflächen 18 der Patrizen 4 Kontakt haben.

Die Stempel 7 sind so ausgebildet, dass diese in zusammengefahren Zustand keinen Kontakt zu den Stempeln 6 haben aber eine Unterseite 19 aufweisen, die eine Oberseite 20 der Stempel 5 berührt.

Die Funktionsweise der vorliegenden Erfindung ist Folgende:

Zwischen den Pressebenen A und B wird eine Wabenstrang 11 erzeugt, der gleichzeitig mit einem Wabenteppich 10 verbunden wird.

Wie in Figur 1 gezeigt wird in einem ersten Schritt werden eine Mehrzahl von Stempel 7 in eine erste Wabenreihe 14 des fertig hergestellten Wabenteppichs 10 der aus einer beliebigen Anzahl an Wabenreihen bestehen kann, eingebracht.

In die Pressebene A wird ein flächiges Substrat 8 eingebracht. Gleichzeitig oder kurz darauf wird in die Pressenebene B ein weiteres flächiges Substrat 9 eingebracht.

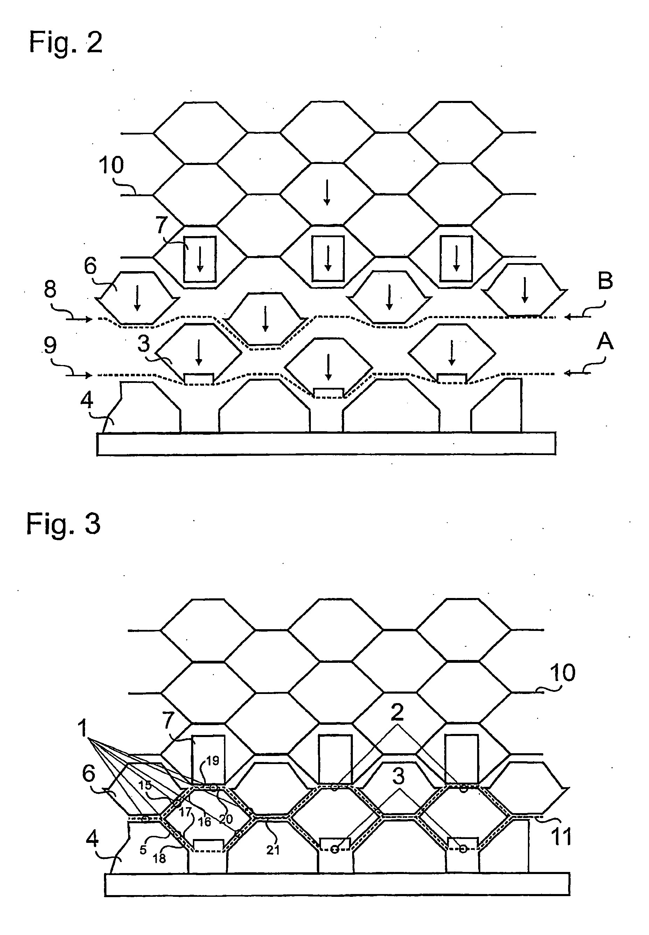

Dann werden, wie in Figur 2 gezeigt, die Reihen der Stempel 5, 6 und 7 in Richtung der feststehenden Patrizen 4 bewegt.

Dabei bewegen sich die benachbarten Stempel 5 und 6 in ihren Reihen zeitversetzt in Richtung der Patrizen, so dass eine wellenförmige Bewegung entsteht. Dadurch können, die Substrate 8 und 9 von aussen in die entstehenden Vertiefen mit nach unten gezogen werden. Bevorzugt wird zuerst der mittlere Stempel der Reihe der Stempel 5 und 6 und dann die rechts und links von diesem angeordneten Stempel nach unten bewegt.

Figur 3 zeigt einen Verfahrensschritt, bei dem alle Stempel 5, 6, und 7 zusammengefahren sind. Mit dem Bezugszeichen 1 sind alle Flächen bezeichnet, die in dieser Position mit Hitze und/oder Druck beaufschlagt werden. Hier wird das Material verdichtet und das Harz oder andere Bindesysteme vernetzen innerhalb kurzer Zeit.

Jeweils eine Unterseite 3 der Waben des Wabenstrangs 11 werden nicht mit Druck und/oder Hitze beaufschlagt. Deshalb bleibt das Material an diesen Unterseiten 3 unverdichtet und das Harz und/oder andere Bindesysteme bleiben unvernetzt und reaktiv.

Die mit Position 2 sind die Oberseiten der Waben des Wabenstrangs 11. Die Oberseiten 2 des Wabenstrangs 11 werden zwischen den seitlichen Flächen 15 und 16 der Stempel 5 und 6 mit dem bereits bestehenden Wabenteppich 10 verpresst. Das Verpressen ist möglich, da diese Flächen beim Herstellen des vorhergehenden Wabenstrang nicht verpresst wurden und noch reaktiv sind. Beim Verpressen werden die Materialien verdichtet und vernetzen zu einem homogenen Steg.

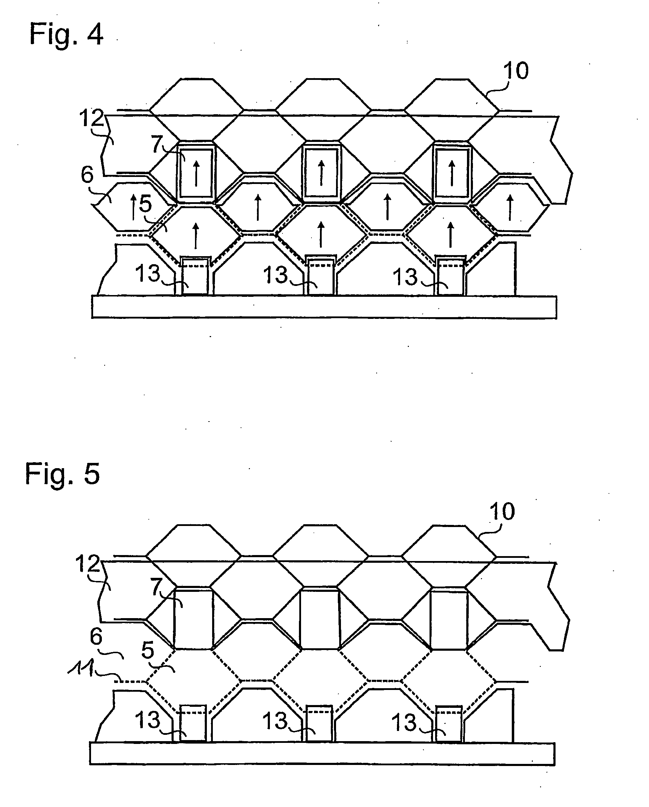

Figur 4 zeigt einen weiteren Verfahrensschritt, bei dem die Stempel 5, 6 und 7 von ihrer Presskraft befreit werden und die Pressebenen druckfrei werden. Der Wabenteppich 10 der mit dem neuen Wabenstrang 11 verbunden ist, wird an Widerlagern 12 und 13 gehalten.

Figur 5 zeigt den neuen vergrösserten Wabenteppich 10/11, aus dem die Stempel 5, 6 und 7 bereits senkrecht zur Blattebene entfernt wurden.

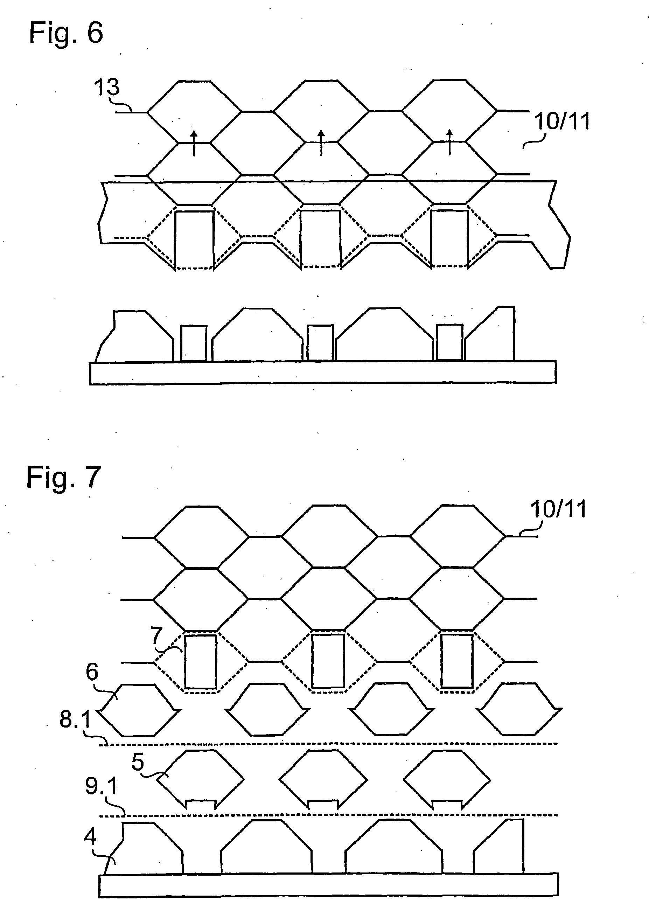

Figur 6 zeigt, wie der Wabenteppich 10/11 mittels der Widerlager 12 und 13 um eine Wabentiefe von den feststehenden Matrizen 4 nach weg nach oben transportiert wird.

In Figur 7 ist eine Wiederholung Schrittes in dem neue Substrate 9.1 und 8.1 in die Pressebenen A und B eingebracht werden. Ein neuer Wabenstrang wird hergestellt und mit dem Wabenteppich 10/11 verpresst.

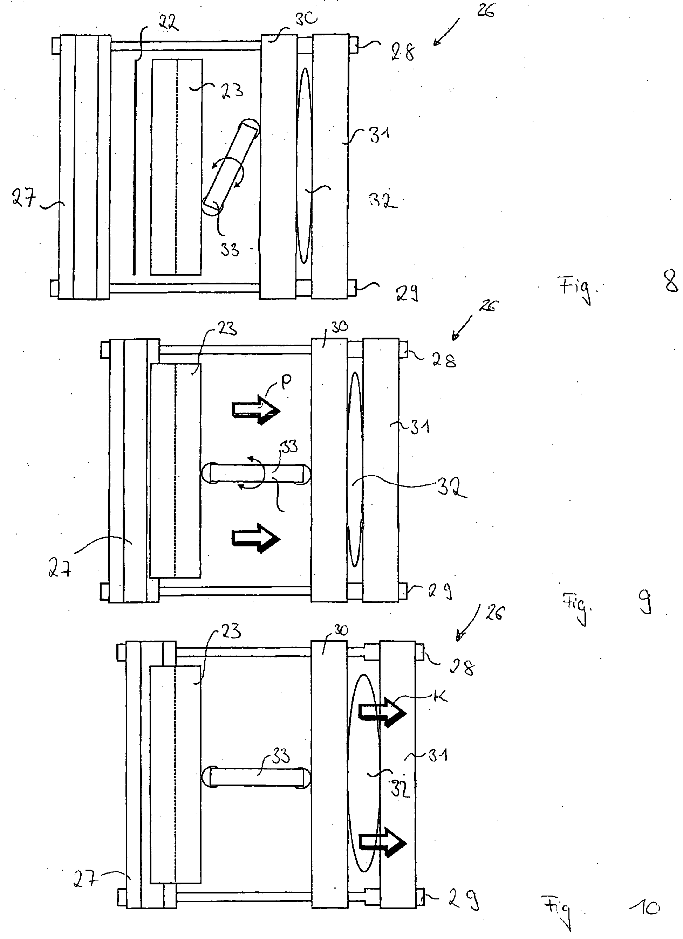

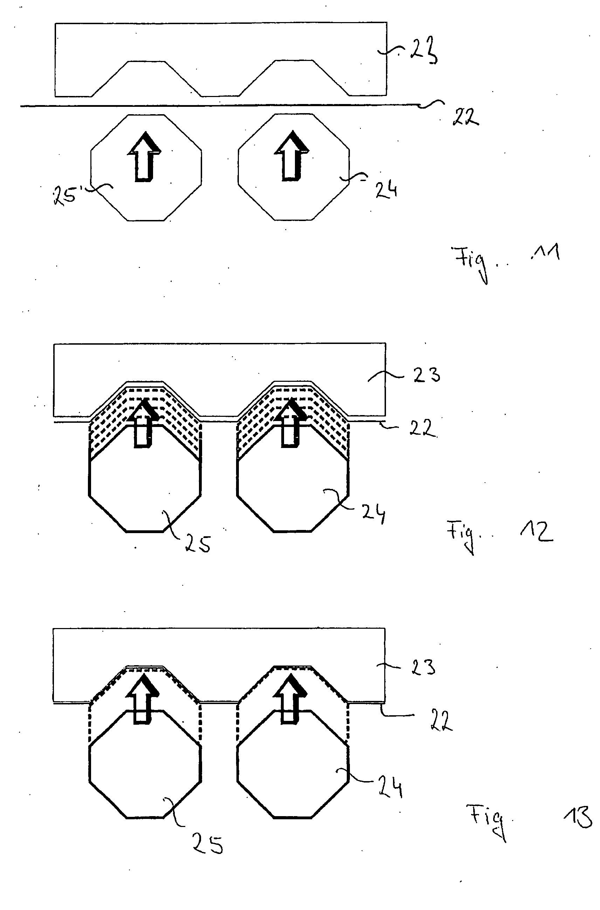

Die Figuren 8 bis 10 zeigen eine Wabenpresse 26, geeignet zum Ausführen der beschriebenen Verfahrensschritte. Die Wabenpress umfasst eine Matrize 23, und eine Patrize 27, welche ein Mehrzahl von den in den Figuren 11 bis 15 dargestellten Stempeln umfasst.

Des weiteren weist die Wabenpresse 26 einen oberen Zuganker 28 und einen unteren Zuganker 29 auf. Der obere Zuganker 28 und der untere Zuganker 29 sind über einen ersten Zugbalken 30 und einen zweiten Zugbalken 31 verbunden. Zwischen dem ersten Zugbalken 30 und dem zweiten Zugbalken 31 ist ein Hydraulikkissen 32 angeordent.

Des weiteren umfasst die Wabenpresse 26 eine Schliessmechanik 33. Die Funktion der Wabenpresse 26 ist folgende:

Wie in den Figuren 8 und 11 dargestellt, wird ein Substrat 22 zwischen die Matrize 23 und die Stempel 24 und 25 der Patrize 27 eingebracht.

Wie in Figur 9 dargestellt wird die Patrize 27 und damit auch die Stempel 24 und 25 über den oberen Zuganker 28 und den unteren Zuganker 29 zu der Matrize 23 in Pfeilrichtung P gefahren. Dabei wird das das Substrat 22, wie in Figur 12 dargestellt nahezu kraftlos durch eine Bewegung der Stempel 24 und 25 in die Matrize 23 in Form gepresst, und durch Betätigen der Schliessmechanik 33 verriegelt.

Vorzugsweise ist die Schliessmechanik 33 als sehr einfache mechanische Einrichtung ausgebildet, die nur gedreht werden muss, um eine lineare Bewegung der Zuganker 28 und 29 zu erreichen. Alternativ, können die Zuganker 28 und 29 auch gezogen werden, sodass die gewünschte Bewegung erreicht wird. Mit der Schliessmechanik 33 wird dann die in Figur 9 dargestellte Position arretier.

Erst wenn das Substrat 22, wie in Figur 13 gezeigt, fast vollständig vorgeformt ist, werden die Stempel 24 und 25 ungefähr für einen Verfahrweg von 0,5 mm mit einer Kraft von 50kN beaufschlagt, um das Substrat 22 zu verdichten.

Dazu wird in einem weiteren Schritt, wie in Figur 10 dargestellt das Hydraulikkissen 30 gefüllt, so dass es den zweiten Zugbalken 31 in Pfeilrichtung K schiebt. Dadurch wird ein hoher Druck auf das Substrat 22 zwischen Matrize 23 und Patrize 27, bzw. den Stempel 24 und 25 aufgebracht.

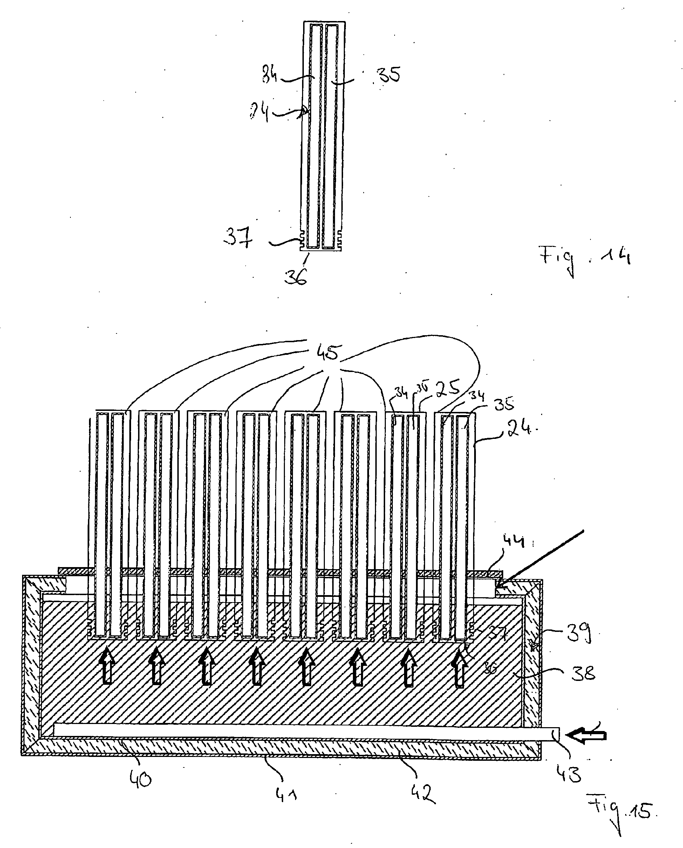

Die Figuren 14 und 15 zeigen weitere schematische Darstellungen eines Stempels 24. Der Stempel 24 umfasst ein bis zwei Wärmerohre 34 und 35. Dadurch ergibt sich der Vorteil, dass der Pressenstempel 24 auf bis zu 300 °C temperiert werden kann.

An seinem unteren Ende 36, dass ist das Ende, das nicht direkt mit der Matrize im Eingriff steht, weist der Pressenstempel 24 eine Mehrzahl von Rippen 37 auf. Dadurch ergibt sich der Vorteil, dass der untere Bereich 36 eine grössere Oberfläche aufweist.

Dies ist besonderes vorteilhaft, da wie in Figur 15 gezeigt, eine Mehrzahl von Pressenstempel 45, die im Aufbau dem Pressenstempel 24 entsprechen zum Temperieren der Wärmerohre 34 und 35 in ein Wärmemedium 38 getaucht werden.

Das Wärmemedium 38 ist bevorzugt in einem Behälter 39 eingebracht. Der Behälter 39 umfasst eine innere Schale 40 und eine äussere Schale 41. Zwischen die innere Schale 40 und die äusseren Schale 41 ist ein Isoliermaterial 42 eingebracht.

Um das Wärmemedium 38 in dem Behälter 39 zu erwärmen, ist in dem Behälter 39 eine Einrichtung zur Wärmeübertragung 43 angeordnet. Zweckmässigerweise ist die Einrichtung zur Wärmeübertragung 43 mit einer nicht dargestellten Wärmequelle, bevorzugt ausserhalb des Behälters 39 verbunden ist.

Des Weiteren ist der Behälter 39 mit einer Abdeckung 44 versehen. Die Abdeckung 44 ist vorzugsweise so ausgeführt, dass sie Durchgänge für die Mehrzahl der Stempel 45 aufweist und die Stempel zum Ausführen der beschriebenen Schritte verfahren werden können.

**Bezugszeichenliste**

| | | | | | |
|---|---|---|---|---|---|
| 1 | Pressfläche | 34 | Wärmeröhre | 67 | |
| 2 | Oberseite Wabenstrang | 35 | Wärmeröhre | 68 | |
| 3 | Unterseite Wabenstrang | 36 | Unteres Ende | 69 | |
| 4 | feststehende Patrize | 37 | Rippen | 70 | |
| 5 | Stempel | 38 | Wärmemedium | 71 | |
| 6 | Stempel | 39 | Behälter | 72 | |
| 7 | Stempel | 40 | Innere Schal | 73 | |
| 8 | Substrat | 41 | Ausserer Schal | 74 | |
| 9 | Substrat | 42 | Isoliermaterial | 75 | |
| 10 | Wabenteppich | 43 | Einrichtung Wärmeübertragung | 76 | |
| 11 | Wabenstrang | 44 | Abdeckung | 77 | |
| 12 | Widerlager | 45 | | 78 | |
| 13 | Widerlager | 46 | | 79 | |
| 14 | erste Wabenreihe von 10 | 47 | | | |
| 15 | Seitenfläche | 48 | | | |
| 16 | Seitenfläche | 49 | | | |
| 17 | Seitenfläche | 50 | | | |
| 18 | Seitenfläche | 51 | | | |
| 19 | Unterseite | 52 | | A | Pressebene |
| 20 | Oberseite | 53 | | B | Pressebene |
| 21 | Verbindungsstück | 54 | | C | Pressebene |
| 22 | Substrat | 55 | | P | Pfeilrichtung |
| 23 | Matrize | 56 | | K | Pfeilrichtung |
| 24 | Stempel | 57 | | | |
| 25 | Stempel | 58 | | | |
| 26 | Wabenpresse | 59 | | | |
| 27 | Patrize | 60 | | | |
| 28 | oberer Zuganker | 61 | | | |
| 29 | unterer Zuganker | 62 | | | |
| 30 | erster Zugbalken | 63 | | | |
| 31 | zweiter Zugbalken | 64 | | | |
| 32 | Hydraulikkissen | 65 | | | |
| 33 | Schliessmechanik | 66 | | | |

## Patentansprüche

1. Verfahren zur Herstellung einer Wabenstruktur mit den Schritten:
a) Herstellen eines Wabenstrangs (11) aus zwei Substraten (8, 9);
b) Verbinden des Wabenstrangs (11) mit einem Wabenteppich (10);
**dadurch gekennzeichnet,**
**dass** das Herstellen des Wabenstrangs (11) aus zwei Substraten (8,9) und das Verbinden des Wabenstrangs (11) mit dem Wabenteppich (10) in einem einzigen Arbeitsschritt ausgeführt wird.

2. Verfahren nach Anspruch 1, **dadurch gekennzeichnet, dass** die Schritte a) und b) den Schritt umfassen:
- Einfädeln einer ersten Reihe Waben (14) eines Wabenteppichs (11) in eine erste Reihe von Stempeln (7) sodass eine freie Seite des Wabenteppichs in einer ersten Pressebene (C) liegt.

3. Verfahren nach Anspruch 1 oder 2, **dadurch gekennzeichnet, dass** die Schritte a) und b) den Schritt umfassen:
- Einbringen eines ersten flächigen Substrats (8) in eine zweite Pressebene (B)

4. Verfahren nach einem der Ansprüche 1 bis 3, **dadurch gekennzeichnet, dass** die Schritte a) und b) den Schritt umfassen:
- Einbringen eines zweiten flächigen Substrats (9) in eine dritte Pressebene (A)

5. Verfahren nach einem der Ansprüche 1 bis 4, **dadurch gekennzeichnet, dass** die Schritte a) und b) den Schritt umfassen:
- wellenförmiges Zusammenfahren der zweiten (B) und der dritten (A) Pressebene, so dass das erste flächige Substrat (8) und das zweite flächige Substrat (9) automatisch nachgezogen werden.

6. Verfahren nach einem der Ansprüche 1 bis 5, **dadurch gekennzeichnet, dass** die Schritte a) und b) den Schritt umfassen:
- Zusammenfahren aller drei Pressebenen (A, B, C), so dass
in der ersten Pressebenen (C) die Oberflächen (2) der Waben Wabenstrangs (11) und die Unterseiten (19) der Waben (14) des Wabenteppichs (11) mit Druck und/oder Hitze beaufschlagt werden,
in der zweiten Pressebene (B) die Verbindungsstücke (21) zwischen den Waben des Wabenstrang (11) und die nach unten gerichteten Seitenflächen (17) des Wabenstrang (11) mit Druck und/oder Hitze beaufschlagt werden und in der dritten Pressebene (A) die nach unten gerichteten Seitenflächen (15) des Wabenstrang (11) mit Druck und/oder Hitze beaufschlagt werden.

7. Verfahren nach einem der Ansprüche 1 bis 3 **gekennzeichnet durch** an die Schritte a) und b) anschliessenden Schritte
c) Verfahren der Stempel (5, 6, 7), so, dass die Pressebenen (A, B, C) druckfrei werden,
d) Entfernen der Stempel (5, 6, 7) aus den fertig gestellten Waben,
e) transportieren der Wabenstruktur (10/11) aus dem Wabenteppich (10) und dem Wabenstrang (11) um die Breite eines Wabenstrangs (11) weg von den Pressebenen (A, B, C).

8. Verfahren nach Anspruch 7. dass die Schritte
- Einbringen eines ersten flächigen Substrats (8) in eine zweite Pressebene (B)
- Einbringen eines zweiten flächigen Substrats (9) in eine dritte Pressebene (A) wiederholt werden.

9. Wabenpresse zur Durchführung des Verfahrens nach einem der Ansprüche 1 bis 8, **gekennzeichnet durch**
eine erste Reihe Stempel (7) und
eine zweite Reihe Stempel (6), die eine erste Presseebene (C) zwischen sich ausbilden;
eine dritte Reihe Stempel (5), die mit der zweiten Reihe Stempel (6) eine zweite Pressebene (B) ausbilden und
eine Reihe feststehender Patrizen (4), die mit der dritten Reihe Stempel (5) eine dritte Pressebene (A) ausbilden.

10. Wabenpresse nach Anspruch 9, **dadurch gekennzeichnet, dass** der Stempel (7) der ersten Reihe als Pressfläche eine Unterfläche (19) aufweist, die in etwa einer Breite eines Verbindungsstücks (21) des Wabenstrangs (10) entspricht.

11. Wabenpresse nach Anspruch 9 oder 10, **dadurch gekennzeichnet, dass** der Stempel (6) der zweiten Reihe eine Pressfläche umfasst, die einem in Richtung der Patrizen (4) weisenden unteren Umfang einer Wabe entspricht.

12. Wabenpresse nach einem der Ansprüche 9 bis 11, **dadurch gekennzeichnet, dass** der Stempel (5) der dritten Reihe eine Pressfläche umfasst die einem Umfang einer Wabe entsprich und eine Unterseite (3) einer Wabe des Wabenstrangs (11) freilässt.

13. Wabenpresse nach einem der Ansprüche 9 bis 12, **dadurch gekennzeichnet, dass** die Patrize (4) eine Pressfläche umfasst, die den nach unten zu den Patrizen hin gerichteten Seitenflächen einer Wabe entspricht.

14. Wabenpresse nach einem der Ansprüche 9 bis 14, **gekennzeichnet durch** zumindest ein Widerlager (12, 13), zum Halten des Wabenteppichs (11) nach dem entfernen der Stempel (12, 13).

15. Wabenpresse nach einem der Ansprüche 9 bis 14, **dadurch gekennzeichnet, dass** der Stempel (24, 25, 45) zumindest ein Wärmerohr (34, 35) umfasst.

## Claims

1. A method for producing a honeycomb structure, with the steps:
a) producing a honeycomb strand (11) from two substrates (8, 9);
b) joining the honeycomb strand (11) to a honeycomb mat (10);
**characterised in that**
the production of the honeycomb strand (11) from two substrates (8, 9) and the joining of the honeycomb strand (11) to the honeycomb mat (10) is carried out in a single operating step.

2. A method according to Claim 1, **characterised in that** steps a) and b) comprise the step:
- threading a first row of honeycombs (14) of a honeycomb mat (11) into a first row of punches (7) so that a free side of the honeycomb mat lies in a first pressing plane (C).

3. A method according to Claim 1 or 2, **characterised in that** steps a) and b) comprise the step:
- introducing a first two-dimensional substrate (8) into a second pressing plane (B).

4. A method according to one of Claims 1 to 3, **characterised in that** steps a) and b) comprise the step:
- introducing a second two-dimensional substrate (9) into a third pressing plane (A).

5. A method according to one of Claims 1 to 4, **characterised in that** steps a) and b) comprise the step:
- bringing together the second (B) and the third (A) pressing planes in a wave-shape, so that the first two-dimensional substrate (8) and the second two-dimensional substrate (9) are automatically drawn behind.

6. A method according to one of Claims 1 to 5, **characterised in that** steps a) and b) comprise the step:
- bringing together all three pressing planes (A, B, C), so that
in the first pressing planes (C) the surfaces (2) of the honeycombs honeycomb strand (11) and the undersides (19) of the honeycombs (14) of the honeycomb mat (10) are acted upon by pressure and/or heat,
in the second pressing plane (B) the connecting pieces (21) between the honeycombs of the honeycomb strand (11) and the downward-directed lateral faces (17) of the honeycomb strand (11) are acted upon by pressure and/or heat, and
in the third pressing plane (A) the downward-directed lateral faces (15) of the honeycomb strand (11) are acted upon by pressure and/or heat.

7. A method according to one of Claims 1 to 3, **characterised by** steps following on from steps a) and b)
c) moving the punches (5, 6, 7) so that the pressing planes (A, B, C) become pressure-free,
d) removing the punches (5, 6, 7) from the finished honeycombs,
e) transporting the honeycomb structure (10 / 11) consisting of the honeycomb mat (10) and the honeycomb strand (11) by the width of a honeycomb strand (11) away from the pressing planes (A, B, C).

8. A method according to Claim 7, **characterised in that** the steps
- introducing a first two-dimensional substrate (8) into a second pressing plane (B)
- introducing a second two-dimensional substrate (9) into a third pressing plane (A) are repeated.

9. A honeycomb press for carrying out the method according to one of Claims 1 to 8, **characterised by**
a first row of punches (7) and
a second row of punches (6) which form a first pressing plane (C) between them;
a third row of punches (5) which form a second pressing plane (B) with the second row of punches (6) and
a row of fixed male dies (4) which form a third pressing plane (A) with the third row of punches (5).

10. A honeycomb press according to Claim 9, **characterised in that** the punch (7) of the first row has as a pressing face a lower face (19) which corresponds approximately to a width of a connecting piece (21) of the honeycomb strand (10).

11. A honeycomb press according to Claim 9 or 10, **characterised in that** the punch (6) of the second row comprises a pressing face which corresponds to a lower periphery of a honeycomb which points in the direction of the male dies (4).

12. A honeycomb press according to one of Claims 9 to 11, **characterised in that** the punch (5) of the third row comprises a pressing face which corresponds to a periphery of a honeycomb and leaves open an underside (3) of a honeycomb of the honeycomb strand (11).

13. A honeycomb press according to one of Claims 9 to 12, **characterised in that** the male die (4) comprises a pressing face which corresponds to the lateral faces of a honeycomb which are directed downwards towards the male dies.

14. A honeycomb press according to one of Claims 9 to 14, **characterised by** at least one abutment (12, 13) for holding the honeycomb mat (11) once the punches (12, 13) have been removed.

15. A honeycomb press according to one of Claims 9 to 14, **characterised in that** the punch (24, 25, 45) comprises at least one heat pipe (34, 35).

## Revendications

1. Procédé pour la fabrication d'une structure alvéolaire, aux étapes consistant à:
a) fabriquer un brin alvéolaire (11) composé de deux supports (8, 9);
b) assembler le brin alvéolaire (11) avec un tapis alvéolaire (10);
**caractérisé par le fait**
**que** la fabrication du brin alvéolaire (11) composé de deux supports (8, 9) et l'assemblage du brin alvéolaire (11) avec le tapis alvéolaire (10) sont réalisés en une seule étape de travail.

2. Procédé selon la revendication 1, **caractérisé par le fait que** les étapes a) et b) comportent l'étape consistant à:
- enfiler une première rangée d'alvéoles (14) d'un tapis alvéolaire (11) dans une première rangée de poinçons (7), de sorte qu'une face libre du tapis alvéolaire se situe dans un premier plan de pression (C).

3. Procédé selon la revendication 1 ou 2, **caractérisé par le fait que** les étapes a) et b) comportent l'étape consistant à:
- introduire un premier substrat plan (8) dans un deuxième plan de pression (B).

4. Procédé selon l'une des revendications 1 à 3, **caractérisé par le fait que** les étapes a) et b) comportent l'étape consistant à:
- introduire un deuxième substrat plan (9) dans un troisième plan de pression (A).

5. Procédé selon l'une des revendications 1 à 4, **caractérisé par le fait que** les étapes a) et b) comportent l'étape consistant à:
rapprocher de forme ondulée le deuxième (B) et le troisième (A) plan de pression, de sorte que le premier substrat plan (8) et le deuxième substrat plat (9) soient automatiquement serrés.

6. Procédé selon l'une des revendications 1 à 5, **caractérisé par le fait que** les étapes a) et b) comportent l'étape consistant à:
- rapprocher les trois plans de pression (A, B, C), de sorte que
dans le premier plan de pression (C), les surfaces (2) des alvéoles du brin alvéolaire (11) et les faces inférieures (19) des alvéoles (14) du tapis alvéolaire (11) soient soumises à de la pression et/ou de la chaleur,
dans le deuxième plan de pression (B), les pièces de raccordement (21) entre les alvéoles du brin alvéolaire (11) et les faces latérales orientées vers le bas (17) du brin alvéolaire (11) soient soumises à de la pression et/ou de la chaleur et, dans le troisième plan de pression (A), les faces latérales orientées vers le bas (15) du brin alvéolaire (11) soient soumises à de la pression et/ou de la chaleur.

7. Procédé selon l'une des revendications 1 à 3, **caractérisé par** les étapes, suivant les étapes a) et b), consistant à
c) déplacer les poinçons (5, 6, 7), de sorte que les plans de pression (A, B, C) deviennent libres de pression,
d) retirer le poinçon (5, 6, 7) des alvéoles terminées,
e) transporter la structure alvéolaire (10/11) hors du tapis alvéolaire (10) et du brin alvéolaire (11) éloignée de la largeur d'un brin alvéolaire (11) des plans de pression (A, B, C).

8. Procédé selon la revendication 7, **caractérisé par le fait que** sont répétées les étapes consistant à
- introduire un premier substrat plan (8) dans un deuxième plan de pression (B)
- introduire un deuxième substrat plan (9) dans un troisième plan de pression (A).

9. Presse alvéolaire permettant de mettre en oeuvre le procédé selon l'une des revendications 1 à 8, **caractérisée par**
une première rangée de poinçons (7), et
une deuxième rangée de poinçons (6) qui forment un premier plan de pression (C) entre eux;
une troisième rangée de poinçons (5) formant avec la deuxième rangée de poinçons (6) un deuxième plan de pression (B), et
une rangée d'éléments mâles stationnaires (4) qui forment avec la troisième rangée de poinçons (5) un troisième plan de pression (A).

10. Presse alvéolaire selon la revendication 9, **caractérisée par le fait que** le poinçon (7) de la première rangée présente, comme surface de pression, une surface inférieure (19) qui correspond environ à une largeur d'une pièce de raccordement (21) du brin alvéolaire (10).

11. Presse alvéolaire selon la revendication 9 ou 10, **caractérisée par le fait que** le poinçon (6) de la deuxième rangée comporte une surface de pression qui correspond à une périphérie inférieure orientée dans la direction des éléments mâles (4) d'une alvéole.

12. Presse alvéolaire selon l'une des revendications 9 à 11, **caractérisée par le fait que** le poinçon (5) de la troisième rangée comporte une surface de pression qui correspond à une périphérie d'une alvéole et laisse libre une face inférieure (3) d'une alvéole du brin alvéolaire (11).

13. Presse alvéolaire selon l'une des revendications 9 à 12, **caractérisée par le fait que** l'élément mâle (4) comporte une surface de pression qui correspond aux surfaces latérales d'une alvéole orientées vers le bas 'vers les éléments mâles.

14. Presse alvéolaire selon l'une des revendications 9 à 14, **caractérisée par** au moins une butée (12, 13) destinée à maintenir le tapis alvéolaire (11) après l'enlèvement du poinçon (12, 13).

15. Presse alvéolaire selon l'une des revendications 9 à 14, **caractérisée par le fait que** le poinçon (24, 25, 45) comporte au moins un caloduc (34, 35).
